# FASCICULE DE BREVET EUROPEEN

(11) **EP 0 527 088 B1**
(45) Date de publication et mention de la délivrance du brevet: **22.02.1995**
(21) Numéro de dépôt: 92402232.0
(22) Date de dépôt: 05.08.1992
(51) Int. Cl.: B23P 19/04, F01L 3/10

(54) **Procédé et dispositif pour placer de manière automatique deux demi-cônes dans l'évidement conique d'une coupelle**
Verfahren und Vorrichtung zum automatischen Einsetzen von zwei Halb-Kogeln in der konischen Aussparung eines Federtellers
Method and device for the automatic placing of two half-cones in the conical recess of a retainer

(30) Priorité: 07.08.1991 FR 9110059
(43) Date de publication de la demande: 10.02.1993
(73) Titulaire: RENAULT AUTOMATION, 92100 Boulogne (FR)
(72) Inventeur: Joyaux, Jean-Marie, F-91510 Janville S/Juine (FR)
(74) Mandataire: Robert, Jean-Pierre

(56) Documents cités:
- FR-A- 2 627 115
- GB-A- 1 007 247
- JP-A- 1 188 239
- JP-A-61 038 831
- JP-A-63 022 235
- PATENT ABSTRACTS OF JAPAN vol. 12, no. 371 (M-748)5 Octobre 1988 & JP-A-63 123 640 (TOSHIBA CORP.) 27 Mai 1988
- PATENT ABSTRACTS OF JAPAN vol. 14, no. 416 (M-1021)7 Septembre 1990 & JP-A-2 160 435 (ISUZU MOTORS LTD) 20 Juin 1990

## Description

La présente invention concerne un procédé pour équiper une coupelle d'appui d'un ressort de soupape avec les éléments de son clavetage sur la tige de soupape -connus sous l'appellation demi-cônes- et les moyens pour son exécution automatique et le contrôle de cette exécution.

On rappellera brièvement que chaque soupape, par exemple d'un moteur à combustion, est rappelée contre son siège par un ressort qui agit sur la tige de soupape au moyen d'une coupelle elle-même clavetée sur cette tige. Les clavettes utilisées sont des demi-cônes qui, insérés entre la coupelle et la tige avec un bourrelet qui se loge dans une gorge de la tige, forment un coin d'immobilisation de la coupelle sur la tige.

La plupart des machines connues pour réaliser cet assemblage comportent un mécanisme d'amenée des coupelles jusqu'à un poste de garnissage, le long d'un trajet horizontal, et un double mécanisme d'amenée des demi-cônes le long d'un trajet principalement vertical aboutissant au voisinage du poste de garnissage, à un niveau supérieur à celui de la coupelle. Elles comportent également des moyens pour transférer une paire de demi-cônes d'une position d'attente vers l'alésage conique de la coupelle.

Par exemple, selon le document US-A-3568292, ces moyens sont constitués par l'extrémité d'une tige mobile verticalement depuis une position haute de prise en charge des deux demi-cônes par attraction magnétique, jusqu'à une position basse à l'intérieur de la coupelle où les demi-cônes sont séparés de la tige qui se rétracte à l'intérieur d'un fourreau de retenue axiale de ceux-ci, lorsque la tige bute sur l'extrémité de la queue de la soupape.

Selon le document FR -A- 2 627 115, qui décrit l'état de la technique le plus proche, le transfert s'opère par un moyen intermédiaire constitué par un tiroir qui se déplace horizontalement entre l'extrémité inférieure du mécanisme d'amenée des demi-cônes et une position à l'aplomb des coupelles. Les demi-cônes sont en outre pris en charge par un dispositif à déplacement vertical pour les conduire dans la coupelle.

Le premier dispositif est utilisé pour le montage proprement dit de la coupelle sur la queue de soupape. Il ne peut donc pas être utilisé pour une simple préparation des coupelles. Même en l'adaptant à une opération de préparation (en substituant une tige poussoir à la queue de soupape), il existe un risque de mauvais placement des demi-cônes du fait même de leur liaison magnétique à la tige qui les déplace, liaison qui n'est pas totalement maîtrisée au moment de son établissement.

Le second dispositif présente quant à lui l'inconvénient d'une perte de guidage lors du passage des demi-cônes depuis leur position d'attente vers un logement prévu dans le tiroir de transfert horizontal, qui peut conduire à des coincements ou à des introductions partielles des pièces dans ce logement pouvant entraîner la détérioration de la machine.

La présente invention entend remédier à ces inconvénients en proposant un procédé qui supprime la préhension ou le déplacement des demi-cônes entre un poste d'attente et la coupelle, permettant d'une part de diminuer le nombre des séquences de fonctionnement d'une machine automatique mettant en oeuvre le procédé et donc permettant d'en augmenter la cadence, et d'autre part, de diminuer les risques de perte de guidage des demi-cônes dans le cycle de mise en place, donc d'augmenter la sécurité de fonctionnement de cette machine automatique.

A ce effet, l'invention a donc pour premier objet un procédé pour placer de manière automatique deux demi-cônes dans l'évidement conique d'une coupelle destinée à les recevoir selon lequel on guide par gravité chacun des demi-cônes de deux empilements sensiblement verticaux, jusqu'à une position d'attente à la base des empilements, on maintient les demi-cônes dans cette position d'attente par pincement sur un noyau, on amène la coupelle sous cette position d'attente, on élève celle-ci entre une position basse d'amenée et d'évacuation et une position haute de réception des demi-cônes de sorte que le noyau y pénètre, on ouvre la pince pour laisser glisser les demi-cônes entre le noyau et la paroi de l'évidement, puis on descend la coupelle pour la dégager du noyau et permettre son évacuation horizontale.

De manière plus précise, on arrête l'élévation de la coupelle à un niveau tel que le mouvement de glissement vertical des empilements lors de l'ouverture de la pince est égal à la hauteur d'un demi-cône et on procède, avant la descente de la coupelle, à la fermeture de la pince sur les demi-cônes immédiatement adjacents à ceux mis en place.

Un second objet de l'invention consiste en une machine pour mettre en oeuvre le procédé ci-dessus. Cette machine comporte d'une manière connue un dispositif d'acheminement des demi-cônes dont la dernière partie est verticale et définit un poste d'attente pour chaque paire de demi-cônes à mettre en place et un dispositif d'amenée des coupelles à garnir au voisinage du poste d'attente et d'évacuation des coupelles garnies, le long d'un trajet situé à un niveau en dessous de celui du poste d'attente.

Conformément à l'invention le dispositif d'amenée comporte un plateau rotatif pourvu sur sa périphérie d'alvéoles formant logements de maintien des coupelles par soutien de leur collerette périphérique, chaque alvéole étant tour à tour présenté à l'aplomb du poste d'attente des demi-cônes, tandis que la machine comporte un dispositif élévateur de coupelles dans l'axe de la partie verticale d'acheminement des demi-cônes et mobile le long de cet axe entre une première position où il est situé sous le plateau rotatif et une seconde position où il fait saillie au-dessus de ce plateau en direction du poste d'attente et au travers de l'alvéole présent sous ce poste.

Dans un mode de réalisation de la machine en question, la partie verticale du dispositif d'acheminement des demi-cônes comporte un fourreau tubulaire extérieur dans lequel est logé un noyau cylindrique pourvu de deux ailes planes diamétralement opposées, le fourreau et le noyau définissant deux canaux demi-cylindriques, symétriques l'un de l'autre par rapport aux ailes, pour guider chacun une colonne de demi-cônes, l'extrémité inférieure du noyau faisant saillie au-delà de l'extrémité inférieure du fourreau pour former une butée d'appui latéral des demi-cônes soumis, au-delà de cette extrémité de fourreau, à l'action d'un poussoir radial rappelé élastiquement en direction du noyau.

En outre le dispositif élévateur comporte un élément central en forme de tulipe pour extraire la coupelle de son logement et la porter en appui sous le poste d'attente, et au moins deux doigts latéraux de manoeuvre des poussoirs radiaux à l'encontre de l'effet de leur organe de rappel élastique, l'élément central étant mobile axialement par rapport aux doigts, à l'encontre d'un organe élastique de rappel tendant à le pousser vers le haut.

Dans cette réalisation de la machine le fourreau comporte au moins une paire de tiges axiales faisant saillie à sa partie inférieure sous l'effet de ressort de rappel, et susceptibles d'être repoussées contre ces ressorts par la coupelle lors de son élévation par le dispositif élévateur.

Afin de permettre un remplacement aisé des pièces d'usure, les fourreaux, noyau et poussoirs latéraux forment un ensemble de moyens fixés de manière démontable et interchangeable sur une partie du bâti de la machine.

Par ailleurs, cette machine de préparation comporte un dispositif extracteur des coupelles pourvues de demi-cônes, hors du plateau, qui comprend un dispositif élévateur situé sous le plateau et une griffe de manutention supérieure appartenant à un dispositif de transfert des coupelles vers une installation de transport située en aval.

On notera enfin que la griffe comporte au moins trois branches élastiques pour prendre en charge la coupelle par le bord de sa collerette supérieure, et comporte en son centre un palpeur de la présence des demi-cônes.

D'autres caractéristiques et avantages de l'invention ressortiront plus clairement de la description de l'un de ses modes de réalisation donné ci-après à titre d'exemple non limitatif.

Au cours de cette description, il sera fait référence aux dessins annexés dans lesquels :

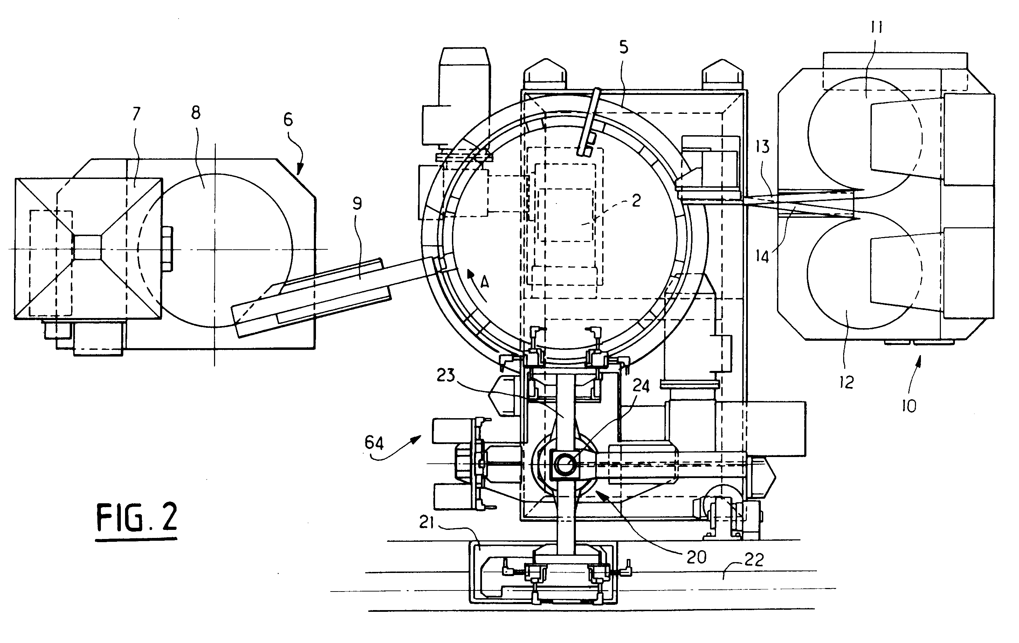

- les figures 1 et 2 sont respectivement une vue en élévation et une vue de dessus d'une machine conforme à l'invention;
- la figure 3 illustre par une vue de détail le poste de cette machine où s'effectue le garnissage des coupelles par les demi-cônes,
- la figure 4 est une vue en coupe de la figure 3 selon la ligne IV IV,
- la figure 5 est une vue partielle en coupe d'un extracteur de coupelles pour leur préhension par un dispositif de transfert,
- et la figure 6 est une vue partielle du dispositif de transfert au droit d'un poste destiné à recueillir les coupelles qu'il manipule.

La machine représentée aux figures comportent quatre parties essentielles.

Il s'agit d'abord d'un plateau circulaire tournant 1, entraîné par un dispositif moteur 2 particulier grâce auquel la rotation du plateau 1 s'opère pas à pas. Ce plateau 1 possède des alvéoles périphériques 3 en forme de fourches horizontales ouvertes radialement vers l'extérieur pour recevoir des coupelles 4 à équiper de demi-cônes. Ces alvéoles sont régulièrement distribués à la périphérie du plateau et sont angulairement écartés les uns des autres d'une valeur égale au pas angulaire de déplacement du plateau 1. Le bord périphérique du plateau circule sous plusieurs rebords fixes 5 en arcs de cercle qui empêchent la sortie spontanée des coupelles des alvéoles. Ces rebords sont séparés par des intervalles libres qui permettent d'accéder aux alvéoles pour des opérations déterminées.

Une seconde partie essentielle de la machine est constituée par un dispositif 6 d'alimentation des alvéoles du plateau en coupelles. Ce dispositif 6 comporte une trémie 7 d'alimentation d'un bol vibrant 8 (ou une table vibrante) conduisant les coupelles dans une rampe 9 dans leur acheminement vers les alvéoles du plateau.

La troisième partie essentielle de la machine est constituèe par un dispositif 10 de distribution de demi-cônes qui comporte deux bols vibrants 11 et 12 prolongés par deux rampes 13 et 14. Ces rampes 13 et 14 aboutissent de manière verticalement superposée à un guide 15. L'une des rampes est vrillée sur elle-même pour que les demi-cônes qu'elle conduit au guide 15 soient retournés afin de présenter les concavité tournée vers le haut, les demi-cônes de l'autre rampe ayant leur concavité tournée vers le bas.

Le guide 15, qui consiste en deux canaux 16 et 17 formant un quart de cercle dans un plan vertical, aboutit à une chute 18 verticale dont la partie inférieure est situé au-dessus et à l'aplomb du trajet circulaire horizontal des alvéoles 3. Cette extrémité inférieure de la chute 18 constitue un poste d'attente 19 des demi-cônes.

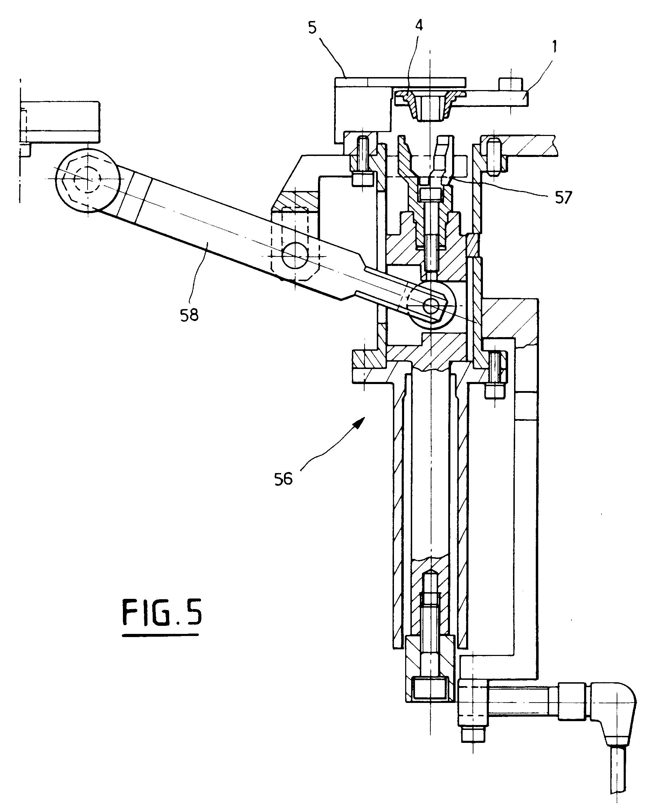

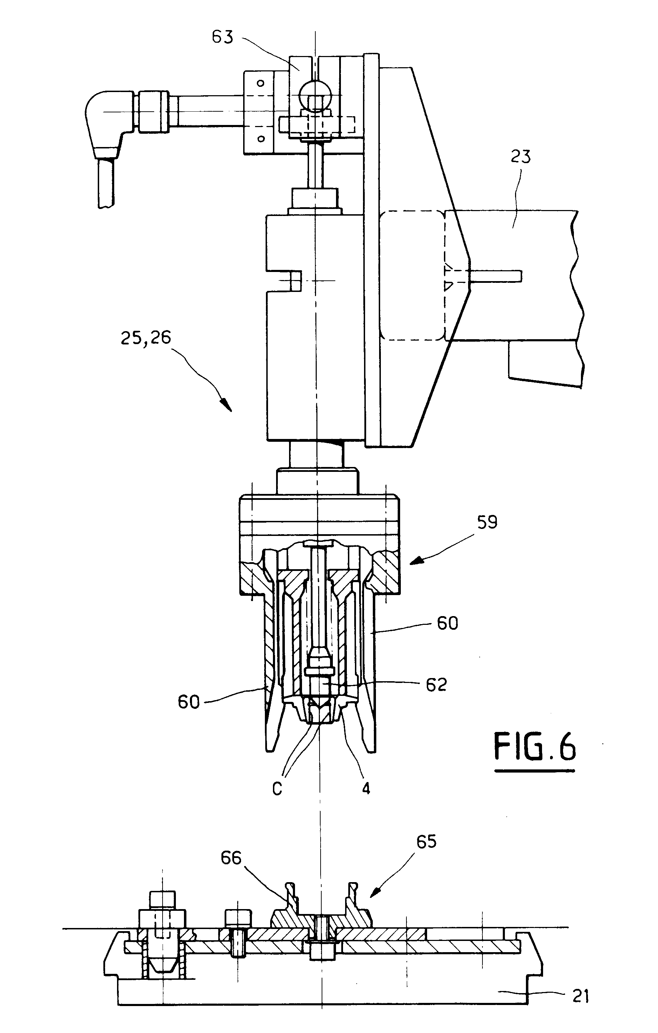

La machine comporte enfin une quatrième partie 20 qui consiste essentiellement en un dispositif de transfert des coupelles 4 équipées de leurs demi-cônes depuis le plateau tournant 1 vers une palette 21 de réception de ces coupelles, situés par exemple sur un transporteur 22. Ce dispositif comporte une traverse horizontale 23, montée tournante autour d'un axe vertical 24 et déplaçable verticalement le long de cet axe, dont chaque extrémité comporte deux moyens de préhension 25, 26 pour prendre en charge les coupelles équipées qui sont présentes dans deux alvéoles consécutifs du plateau 1. Par rotation d'un demi-tour, les coupelles sont transportées à l'aplomb de la palette 21 et tandis que les préhenseurs 25, 26 d'une extrémité déchargent les coupelles sur la palette, ceux de l'autre extrémité agrippent les deux coupelles suivantes. Les figures 5 et 6 illustrent plus en détail les dispositions particulières de ce dispositif de transfert.

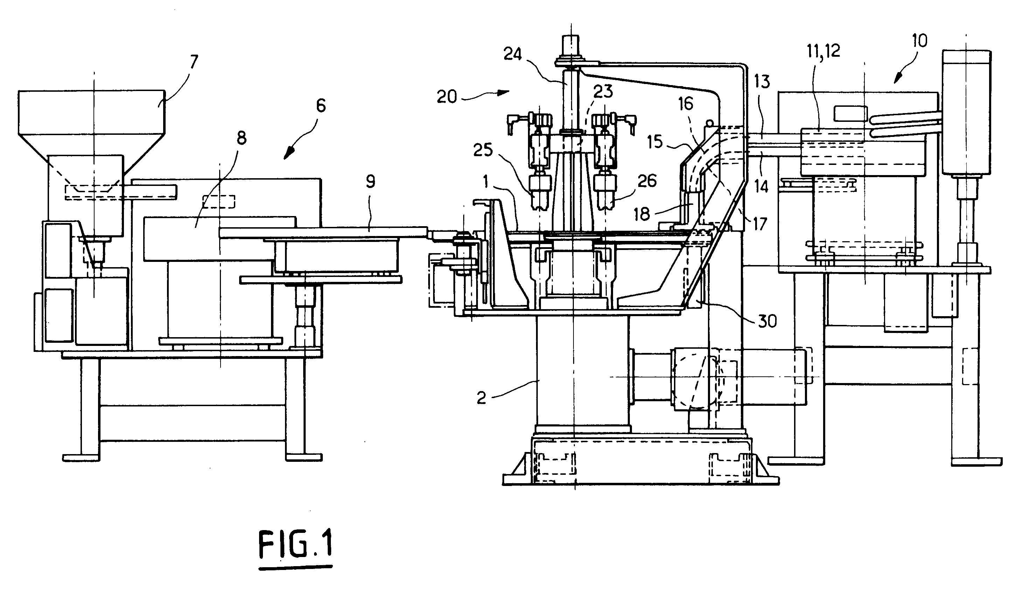

Le sens de rotation du plateau 1 est noté A sur la figure 1. Chaque alvéole 3 est formé dans une pièce rapportée à la périphérie du plateau. Cette pièce est, comme dit précédemment, en forme de fourche radiale entre les branches de laquelle est glissé radialement le fût conique de la coupelle, et sur les branches et le fond de laquelle repose la collerette supérieure de la coupelle 4.

Cette introduction est réalisée à la sortie de la rampe 9. Pas à pas, chaque alvéole chargé d'une coupelle est amené sous l'extrémité inférieure 19 de la chute 18.

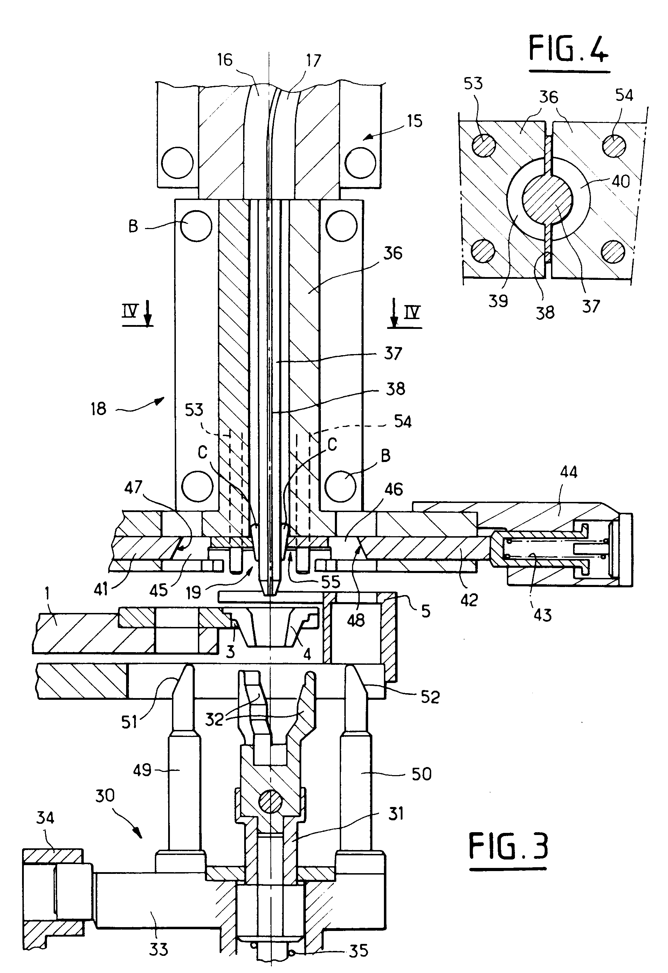

En face de cette chute, situé sous le plateau comme représenté à la figure 3, la machine comporte un dispositif 30 élévateur des coupelles 4. Il est essentiellement constitué par un poussoir vertical 31 dont la partie supérieure active comporte trois doigts 32 définissant une sorte de tulipe qui peut entrer au contact de la surface inférieure de la collerette de chaque coupelle. On notera à cet effet la paroi horizontale de l'alvéole qui soutient cette collerette possède des embrèvements pour le passage de ces doigts.

Ce poussoir vertical est porté par un plateau élévateur 33 qui lui-même est accouplé à un mécanisme 34 moteur pour provoquer l'élévation et l'abaissement du plateau 33 en synchronisme avec le mouvement de rotation pas à pas du plateau 1. La liaison entre le poussoir vertical 31 et le plateau 33 autorise un coulissement vertical du doigt par rapport au plateau 34 à l'encontre d'un organe élastique de rappel 35 qui tend à repousser le doigt vers le haut par rapport au plateau.

Les deux canaux du guide 15 aboutissent à la partie supérieure de la chute verticale 18 qui est constituée d'un fourreau extérieur 36 délimitant un espace intérieur cylindrique dans lequel est logé un noyau 37 qui comporte deux ailes extérieures radiales 38 divisant l'espace tubulaire entre fourreau et noyau en deux canaux symétriques 39 et 40 pour recevoir chacun la série de demi-cônes issus respectivement des voies de guidage 16 et 17. On remarquera notamment à la figure 4, que le fourreau 36 est en deux parties rapprochées l'une de l'autre par des moyens de serrage et emprisonnent la bordure extrême des ailes 38 du noyau 37.

Le noyau 37 fait saillie au-delà de l'extrémité inférieure du fourreau. Sous cette extrémité inférieure, le dispositif comporte deux poussoirs coulissants 41, 42 radiaux, opposés, qui sont rappelés élastiquement contre la partie du noyau 37 extérieure au fourreau par, pour chacun d'eux, un ressort 43 logé dans un boîtier fixe 44 solidaire du fourreau.

L'ensemble fourreau, noyau et poussoirs ainsi que leur organe de guidage et de rappel, forme une unité compacte et pré-réglée qui est fixé à un bâti de la machine non-représenté par des éléments de fixation B démontables. Cette disposition est particulièrement avantageuse car ces éléments constituent l'essentiel des pièces d'usures de la machine et demandent donc à être vérifiées ou changées, ce qui peut être rapidement réalisé.

Chaque poussoir 41, 42 peut donc retenir un demi-cône C plaqué contre le noyau 37. Ainsi la chute 18 constitue un magasin vertical pour deux piles de demi-cônes.

Les poussoirs 41, 42 possèdent chacun une ouverture 45, 46 définissant une surface de came inclinée 47, 48. Par ailleurs le plateau élévateur 33 porte des doigts 49, 50 dont l'extrémité 51, 52 est également pentue.

Le plateau rotatif 1 et le rebord fixe 5 possèdent des ouvertures de passage des doigts 49 et 50 qui peuvent ainsi atteindre, lors de l'élévation du plateau 33, les ouvertures 45 et 46. Les extrémités 51, 52 pourront alors rencontrer les surfaces 47, 48.

On notera enfin la présence de tiges verticales 53, 54 (en nombre de 3 ou 4) montées à coulissement dans le fourreau 36 et faisant saillie sous l'extrémité de ce fourreau grâce à un ressort de rappel non-représenté qui les repousse vers le bas.

Au début de chaque cycle de garnissage, la machine est dans l'état représentée à la figure 3. Les demi-cônes C sont bloqués par les poussoirs 41 et 42 contre le noyau 37 et retiennent toute la colonne qui surmonte chacun d'eux.

Grâce au moyen d'entraînement 34, le plateau 33 est élevé et la tulipe 32 soulève la coupelle 5, qui rencontre et repousse les tiges 53 et 54, et est plaquée contre une surface 55 formant la face inférieure du fourreau.

A partir de cet instant, la poursuite de l'élévation du plateau 33 fait pénétrer les doigts 49 et 50 dans les ouvertures 45 et 46 des poussoirs 41 et 42. En effet, le poussoir 31 reste stationnaire et coulisse dans le plateau 33 en comprimant le ressort 35. Au cours de la pénétration des doigts 49 et 50, dans les poussoirs, les surfaces 47 et 51 d'une part et 48 et 52 d'autre part coopèrent pour éloigner les poussoirs 41 et 42 du noyau 37. Les demi-cônes C sont ainsi libérés et tombent dans la coupelle, guidés dans leur chute par l'extrémité de noyau 37 qui est logée à l'intérieur du fût de la coupelle 4. Dans le même temps, les deux piles de demi-cônes au-dessus de ceux libérés sont descendues de la même manière. Si la hauteur de chute des demi-cônes libérés est égale à la hauteur des demi-cônes, on trouvera au niveau des poussoirs deux nouveaux demi-cônes qui sont exactement à la place qu'occupait ceux qui viennent d'être logés dans la coupelle.

On commande ensuite la descente du plateau 33 qui entraîne d'abord la rétraction des doigts 49, 50, libérant les poussoirs 41, 42, capables alors sous l'effet des ressorts tels que 43, de maintenir les nouveaux demi-cônes plaqués contre le noyau 37. Ensuite le poussoir 31 peut descendre surmonté de la coupelle 4 garnie et accompagnée dans le début de ce mouvement par les tiges 53 et 54 qui font saillie au-delà de la surface 55. L'escamotage complet du poussoir 31 et des doigts 49 et 50 sous le plateau tournant 1 permet de déposer la coupelle garnie 4 dans l'alvéole du plateau 1.

La rotation du plateau 1 conduit donc cette coupelle garnie au niveau du poste de transfert 20. A cet endroit la machine comprend un élévateur 56 (figure 5) sous le plateau, qui comporte comme le poussoir 31, une tulipe 57 d'extraction de la coupelle 4 hors de son alvéole. L'élévation est assurée par un levier de manoeuvre 58, associé à un organe moteur non représenté qui est actionné en synchronisme avec l'entraînement en rotation pas à pas du plateau rotatif 1. Lorsque la coupelle 4 est ainsi soutenue au-dessus du plateau 1, elle peut être saisie par un organe de préhension tels que ceux 25, 26 du dispositif de transfert 20. La figure 6 illustre schématiquement un tel organe préhenseur : il s'agit d'une pince 59 possédant au moins trois branches élastiques verticales 60 (dont deux seulement sont visibles sur la figure). Lorsque cette pince vient coiffer la coupelle portée par la tulipe 57, les branches 60 sont écartées par le bord de la coupelle et grâce à un petit épaulement 61, elles viennent s'encliqueter sous ce bord. Le mouvement vertical des pinces est assuré par la potence 23, 24 elle-même.

Il faut noter, à l'intérieur de la pince 59, l'existence d'un palpeur 62 qui détecte la présence (ou l'absence) d'une paire de demi-cônes C dans la coupelle. Il s'agit de l'extrémité conique d'une tige rappelée vers le bas par un ressort. Si cette extrémité rencontre les deux demi-cônes C en place, elle est repoussée vers le haut par la coupelle 4 et cette information est recueillie par un capteur 63, pour son exploitation par l'automatisme de commande de la machine, Si l'un ou les deux demi-cônes manquent, l'extrémité conique de cette tige n'est pas repoussée ou est déviée si bien que le capteur 63 enregistre une information différente de celle correspondante à la présence correcte des demi-cônes. L'automatisme de la machine est alors informé du défaut et la pince qui a pris en charge la coupelle mal garnie est arrêtée à l'aplomb d'un poste intermédiaire 64 entre le plateau 1 qui est déchargé et la palette 21 qui est à charger, ce poste étant destiné à recueillir les pièces défectueuses.

Pour libérer la coupelle de l'emprise de la pince, la palette 21 comporte un organe 65 qui constitue logement de réception de la coupelle 4, dont la paroi latérale 66 est suffisamment haute pour constituer écarteur des branches 60. Ceci se passe lorsque son bord supérieur vient au contact de la surface intérieure de ces branches. La coupelle tombe alors dans le support 65.

Au poste 64, il peut exister une disposition semblable dans laquelle l'organe 65 est l'extrémité d'un tube destiné à évacuer et guider les coupelles mal garnies.

On remarquera sur les figures que le dispositif de transfert 20 comporte deux pinces 59 de chaque côté de la potence 23 ; le transfert traite donc à chaque fois une paire de coupelles avec un cycle de garnissage deux fois moins long que le cycle de transfert.

## Revendications

1. Procédé pour placer de manière automatique deux demi-cônes dans l'évidement conique d'une coupelle (4) destinée à les recevoir, selon lequel on guide par gravité chacun des demi-cônes (C) de deux empilements sensiblement verticaux, jusqu'à une position d'attente à la base des empilements, caractérisé en ce qu'on maintient les demi-cônes (C) dans cette position d'attente par pincement sur un noyau (37), on amène la coupelle (4) sous cette position d'attente, on élève celle-ci entre une position basse d'amenée et d'évacuation et une position haute de réception des demi-cônes de sorte que le noyau (37) y pénètre, et dans laquelle l'évidement forme une butée sur les demi-cônes distante de la position d'attente d'une valeur égale à la hauteur d'un demi-cône, on ouvre la pince (41) (42) pour laisser glisser l'ensemble des deux empilements, on ferme la pince (41) (42) sur les demi-cônes immédiatement adjacents à ceux mis en place, puis on descend la coupelle pour la dégager du noyau (37) et permettre son évacuation horizontale.

2. Machine pour mettre en oeuvre le procédé selon la revendication 1, comportant un dispositif d'acheminement des demi-cônes (C) dont la dernière partie est verticale et définit un poste d'attente pour chaque paire de demi-cônes à mettre en place, un dispositif d'amenée des coupelles à garnir au voisinage du poste d'attente, et d'évacuation des coupelles garnies, le long d'un trajet situé à un niveau en dessous de celui du poste d'attente, caractérisé en ce que le poste d'attente comporte une pince (41, 42) de maintien de chaque paire de demi-cônes à mettre en place et en ce que le dispositif d'amenée comporte un plateau rotatif (1) pourvu sur sa périphérie d'alvéoles (3) formant logement de maintien des coupelles par soutien de leur collerette (4) périphérique, chaque alvéole étant tour à tour présenté à l'aplomb du poste d'attente (19) des demi-cônes (C), et en ce que la machine comporte un dispositif élévateur (30) de coupelles (4) dans l'axe de la partie verticale (18) d'acheminement des demi-cônes (C) et mobile le long de cet axe entre une première position où il est situé sous le plateau rotatif (1) et une seconde position dans laquelle il fait saillie au-dessus de ce plateau (1) en direction du poste d'attente (19) et au travers de l'alvéole (3) présent sous ce poste et il constitue un moyen de commande de l'ouverture de la pince (41, 42).

3. Machine selon la revendication 2, caractérisée en ce que la partie verticale (18) du dispositif d'acheminement des demi-cônes C comporte un fourreau (36) tubulaire extérieur dans lequel est logé un noyau cylindrique (37) pourvu de deux ailes planes (38) diamétralement opposées, le fourreau et le noyau définissant deux canaux (39) (40) demi-cylindriques, symétriques l'un de l'autre par rapport aux ailes, pour guider chacun une colonne de demi-cônes (C), l'extrémité inférieure du noyau (37) faisant saillie au-delà de l'extrémité inférieure du fourreau (36) pour former une butée d'appui latérale de chacun des demi-cônes (C) soumis, au-delà de cette extrémité de fourreau, à l'action d'un poussoir radial (41) 42) rappelé élastiquement en direction du noyau (37).

4. Machine selon la revendication 3, caractérisée en ce que le dispositif élévateur (30) comporte un élément central (31) en forme de tulipe (32) pour extraire la coupelle (4) de son logement (3) et la porter en appui sous le poste d'attente, et au moins deux doigts latéraux (49) (50) de manoeuvre des poussoirs (41) (42) radiaux à l'encontre de l'effet de leur organe de rappel élastique (43), l'élément central (31) étant mobile axialement par rapport aux doigts (49) (50), à l'encontre de l'effet d'un organe élastique (35) de rappel tendant à le pousser vers le haut.

5. Machine selon l'une des revendications 3 et 4 caractérisée en ce que le fourreau (36) comporte au moins une paire de poussoirs axiaux (53) (54) faisant saillie à sa partie inférieure sous l'effet de ressorts de rappel et susceptibles d'être repoussés contre ces ressorts par la coupelle (4) lors de son élévation par le dispositif élévateur.

6. Machine selon l'une des revendications 2 et 5 caractérisée en ce que les fourreau (36) noyau (37) et poussoirs (41) (42) latéraux forment un ensemble de moyens fixés de manière démontable et interchangeable sur une partie du bâti de la machine.

7. Machine selon l'une des revendications 3 à 6 caractérisée en ce qu'elle comporte un dispositif (20) extracteur des coupelles (4) pourvus des demi-cônes (C) hors du plateau (1), qui comporte un dispositif élévateur (56) situé sous le plateau (1) et une griffe de manutention (59) supérieure appartenant à un dispositif (20) de transfert des coupelles vers une installation aval.

8. Machine selon la revendication 7, caractérisée en ce que la griffe (59) porte au moins trois branches élastiques (60) pour prendre en charge la coupelle (4) par le bord de sa collerette supérieure, et comporte en son centre un palpeur de la présence des demi-cônes (C).

## Claims

1. A process for automatically fitting two half-cones in the conical recess of a cup (4) which is intended to receive them, wherein each of the half-cones (C) is guided by gravity from two substantially vertical stacks to a waiting position at the base of the stacks, characterised in that the half-cones (C) are held in that waiting position by being gripped on to a shank (37), the cup (4) is moved into place below said waiting position, the cup is raised between a downward feed and discharge position and an upward position for receiving the half-cones in such a way that the shank (37) passes thereinto, and in which the recess forms an abutment in relation to the half-cones which is spaced from the waiting position by a distance equal to the height of a half-cone, the gripping means (41) (42) is opened to allow the assembly of the two stacks to slide, the gripping means (41) (42) is closed on the half-cones which are immediately adjacent to the fitted half-cones, then the cup is moved downwardly to disengage it from the shank (37) and permit horizontal discharge thereof.

2. A machine for carrying out the process according to claim 1 comprising a device for advancing the half-cones (C), the last part of which is vertical and defines a waiting station for each pair of half-cones to be fitted, and a device for feeding the cups to be fitted with the half-cones to the vicinity of the waiting station and for discharging the cups fitted with the half-cones, along a path of movement disposed at a level below that of the waiting station, characterised in that the waiting station comprises a gripping means (41, 42) for holding each pair of half-cones to be fitted and that the feed device comprises a rotary plate (1) provided on its periphery with cavities (3) forming a housing means for holding the cups by supporting the peripheral collar portion (4) thereof, each cavity being presented in turn in vertical alignment with the waiting station (19) for the half-cones (C), and that the machine comprises an elevator device (30) for elevating cups (4) on the axis of the vertical part (18) of the advance movement of the half-cones (C) and movable along said axis between a first position in which it is disposed below the rotary plate (1) and a second position in which it projects above said plate (1) in the direction of the waiting station (19) and through the cavity (3) present below said station and it constitutes a means for controlling opening of the gripping means (41, 42).

3. A machine according to claim 2 characterised in that the vertical part (18) of the device for advancing the half-cones (C) comprises an external tubular casing (36) in which there is accommodated a cylindrical shank (36) provided with two diametrally opposite flat wings (38), the casing and the shank defining two semicylindrical channels (39) (40) which are symmetrical relative to each other with respect to the wings for each guiding a column of half-cones (C), the lower end of the shank (37) projecting beyond the lower end of the casing (36) to form a lateral support abutment for each of the half-cones (C) which, beyond said casing end, are subjected to the action of a radial thrust member (41) (42) which is returned resiliently in the direction of the shank (37).

4. A machine according to claim 3 characterised in that the elevator device (30) comprises a central element (31) in the form of a tulip (32) for extracting the cup (4) from its housing (3) and carrying it in a supported condition beneath the waiting station, and at least two lateral fingers (49) (50) for actuation of the radial thrust members (41) (42) against the effect of their resilient return member (43), the central element (31) being movable axially with respect to the fingers (49) (50) against the effect of a resilient return member (35) tending to urge it upwardly.

5. A machine according to one of claims 3 and 4 characterised in that the casing (36) comprises at least one pair of axial thrust members (53) (54) projecting at its lower part under the effect of return springs and capable of being pushed back against said springs by the cup (4) when it is elevated by the elevator device.

6. A machine according to one of claims 2 and 5 characterised in that the casing (36), shank (37) and lateral thrust members (41) (42) form an assembly of means feed removably and interchangeably on a part of the frame structure of the machine.

7. A machine according to one of claims 3 to 6 characterised in that it comprises a device (20) for extracting the cups (4) which are provided with the half-cones (C) from the plate (1), which comprises an elevator device (56) disposed below the plate (1) and an upper handling gripper (59) belonging to a device (20) for transferring the cups towards a downstream installation.

8. A machine according to claim 7 characterised in that the gripper (59) carries at least three elastic legs (60) for taking hold of the cup (4) by way of the edge of its upper collar portion, and at its centre comprises a sensor for sensing the presence of the half-cones (C).

## Patentansprüche

1. Verfahren zum automatischen Einsetzen von zwei Halbkegeln in die konische Vertiefung eines für die Aufnahme der Halbkegel bestimmten Tellers (4), wonach jeder der Halbkegel (C) von zwei im wesentlichen vertikalen Stapeln durch Schwerkraft in eine Warteposition am Fuß der Stapel geführt wird, dadurch gekennzeichnet, daß die Halbkegel (C) durch Zangengriff an einem Dorn (37) in dieser Warteposition gehalten werden, daß der Teller (4) unter diese Warteposition geführt wird, daß der Teller von einer unteren Zuführ- und Entnahmeposition in eine obere Aufnahmeposition der Halbkegel gehoben wird, in welcher der Dorn (37) in ihn eindringt und in welcher die Vertiefung einen Anschlag für die Halbkegel bildet, der um einen gleich der Höhe eines Halbkegels entsprechenden Wert von der Warteposition entfernt ist, daß die Zange (41,42) geöffnet wird, um die Gesamtheit der beiden Stapel abgleiten zu lassen, daß die Zange (41), (42) um die den eingesetzten Halbkegeln direkt benachbarten Halbkegel geschlossen wird und daß dann der Teller nach unten gefahren wird, um ihn von dem Dorn (37) zu lösen und seine Entnahme in horizontaler Richtung zu ermöglichen.

2. Maschine zur Durchführung des Verfahrens gemäß Anspruch 1, umfassend eine Vorrichtung zum Befördern der Halbkegel (C), wobei sich der unterste Teil dieser Vorrichtung vertikal erstreckt und eine Wartestation für jedes einzusetzende Halbkegelpaar bildet, und eine der Wartestation benachbarte Vorrichtung zum Zuführen der zu bestückenden Teller und zur Entnahme der bestückten Teller entlang einer Bahn, die auf einer Ebene unterhalb jener der Wartestation gelegen ist, dadurch gekennzeichnet, daß die Wartestation eine Greifzange (41,42) zum Halten eines jeden einzusetzenden Halbkegelpaares umfaßt und daß die Zuführvorrichtung mit einem Drehteller (1) ausgestattet ist, der an seiner Peripherie mit Aussparungen (3) versehen ist, die eine Aufnahme zum Halten der Teller (4) durch Unterstützen des Randflansches derselben bilden, wobei die Aussparungen nacheinander in eine Linie mit der Warteposition (19) der Halbkegel (C) gebracht werden, und daß die Maschine eine Vorrichtung (30) zum Heben der Teller (4) in der Achse des vertikalen Abschnitts (18) der Vorrichtung zur Beförderung der Halbkegel (C) umfaßt, die entlang dieser Achse zwischen einer ersten Position, in der sie sich unter dem Drehteller (1) befindet, und einer zweiten Position, in der sie in Richtung der Wartestation (19) und durch die unter dieser Station vorhandene Aussparung (3) hindurch über diesen Drehteller (1) hinausragt, bewegbar ist und ein Mittel zur Steuerung der Öffnung der Greifzange (41,42) bildet.

3. Maschine nach Anspruch 2, dadurch gekennzeichnet, daß der vertikale Abschnitt (18) der Vorrichtung zum Befördern der Halbkegel (C) eine rohrförmige äußere Hülse (36) umfaßt, in der ein zylindrischer Dorn (37) mit zwei einander diametral entgegengesetzten flachen Flügeln (38) angeordnet ist, wobei die Hülse und der Dorn zwei halbzylindrische, in bezug auf die Flügel zueinander symmetrische Kanäle (39,40) bilden, um jeweils eine Säule von Halbkegeln (C) zu führen, wobei das untere Ende des Dorns (37) über das untere Ende der Hülse (36) vorsteht, um eine zusätzliche seitliche Stütze für jeden der Halbkegel (C) zu bilden, die jenseits dieses Endes der Hülse der Aktion eines radialen Stößels (41,42) ausgesetzt sind, der in Richtung des Dorns (37) elastisch vorgespannt ist.

4. Maschine nach Anspruch 3, dadurch gekennzeichnet, daß die Hebevorrichtung (30) ein zentrales Element (31) in Form einer Tulpe (32) umfaßt, um den Teller (4) aus seinem Sitz (3) herauszuziehen und ihn unter der Wartestation zur Anlage zu bringen, und zumindest zwei seitliche Daumen (49,50) zur Betätigung der radialen Stößel (41,42) gegen die Wirkung ihres elastischen Vorspannorgans (43), wobei das zentrale Element (31) relativ zu den Daumen (49,50) axial gegen die Wirkung eines elastischen Rückstellorgans (35) beweglich ist, das versucht, das Element (31) nach oben zu drücken.

5. Maschine nach einem der Ansprüche 3 oder 4, dadurch gekennzeichnet, daß die Hülse (36) zumindest ein Paar axialer Stößel (53,54) aufweist, die unter der Wirkung von Rückstellfedern aus ihrem unteren Teil vorspringen und beim Heben des Tellers (4) mittels der Hebevorrichtung von diesem gegen diese Federn zurückgeschoben werden können.

6. Maschine nach einem der Ansprüche 2 oder 5, dadurch gekennzeichnet, daß die Hülse (36), der Dorn (37) und die seitlichen Stößel (41,42) eine Baugruppe bilden, die abnehmbar und austauschbar an einem Abschnitt des Maschinenrahmens montiert ist.

7. Maschine nach einem der Ansprüche 3 bis 6, gekennzeichnet durch eine Vorrichtung (20) zum Entnehmen der mit Halbkegeln (C) versehenen Teller (4) aus dem Drehteller (1), die eine unter dem Drehteller (1) angeordnete Hebevorrichtung (56) und einen zu einer Vorrichtung (20) für den Transport der Teller zu einer stromabwärts gelegenen Einrichtung gehörenden oberen Greifer (59) umfaßt.

8. Maschine nach Anspruch 7, dadurch gekennzeichnet, daß der Greifer (59) zumindest drei elastische Arme (60) hat, um den Teller (4) an dem Rand seines oberen Flansches zu fassen, und daß er in seiner Mitte einen Fühler zum Nachweis vorhandener Halbkegel (C) besitzt.
